# EUROPEAN PATENT APPLICATION

(11) **EP 4 809 827 A1**
(43) Date of publication of application: **23.09.2026**
(21) Application number: 25854397.4
(22) Date of filing: 08.08.2025
(51) Int. Cl.: A22C 17/00, A22C 21/00

(54) **CONTROL DEVICE FOR MEAT PROCESSING APPARATUS, AND MEAT PROCESSING APPARATUS**

(30) Priority: 13.08.2024 JP 2024134753
(71) Applicant: MAYEKAWA MFG. CO., LTD., Tokyo 135-8482 (JP)
(72) Inventor: YAMASHITA, Tomoki, Tokyo 135-8482 (JP); KIMURA, Kenichiro, Tokyo 135-8482 (JP); TERADA, Naoto, Tokyo 135-8482 (JP)
(74) Representative: Regimbeau
(86) International application number: PCT/JP2025/028274
(87) International publication number: WO 2026/038534

(57) **Abstract**

A control device for a meat processing apparatus according to an embodiment includes: a position information acquisition unit configured to acquire position information of meat in time-series imaging data including the meat during meat processing; a positional deviation detection unit configured to detect the presence or absence of a positional deviation of the meat during the meat processing, based on a difference between the position information of the meat at a reference time and the position information of the meat at a latest time; and a correction command output unit configured to, when the positional deviation detection unit detects the positional deviation, output a control command to correct a position of the meat to a positional deviation correction device for correcting the positional deviation of the meat.

## Description

### TECHNICAL FIELD

The present disclosure relates to a control device for a meat processing apparatus, and a meat processing apparatus.

### BACKGROUND

Meat processing apparatuses that automatically convey and process meat are known. For example, a meat processing apparatus described in Patent Document 1 includes a plurality of conveyors for conveying meat. In the meat processing apparatus described in Patent Document 1, meat conveyed by the conveyors is processed by a multi-axis robot equipped with a meat processing tool.

### Citation List

### Patent Literature

Patent Document 1: JP2022-170894A

### SUMMARY

### Problems to be Solved

In an apparatus for processing meat on a conveyor, such as the meat processing apparatus described in Patent Document 1, desired processing such as cutting is performed based on imaging data obtained by imaging the meat on the conveyor with, for example, a camera.

If the position of the meat deviates during meat processing, there is a possibility that the desired processing cannot be performed.

In view of the above circumstances, an object of at least one embodiment of the present disclosure is to provide a control device for a meat processing apparatus and a meat processing apparatus capable of correcting the position of meat even if the position of the meat deviates during meat processing.

### Solution to the Problems

(1) A control device for a meat processing apparatus according to at least one embodiment of the present disclosure is a control device for a meat processing apparatus, including:
   a position information acquisition unit configured to acquire position information of meat in time-series imaging data including the meat during meat processing;
   a positional deviation detection unit configured to detect presence or absence of a positional deviation of the meat during the meat processing, based on a difference between the position information of the meat at a reference time and the position information of the meat at a latest time; and
   a correction command output unit configured to, when the positional deviation detection unit detects the positional deviation, output a control command to correct a position of the meat to a positional deviation correction device for correcting the positional deviation of the meat.
(2) A meat processing apparatus according to at least one embodiment of the present disclosure includes:
   the control device having the above configuration (1);
   a conveyor device for conveying the meat;
   an imaging device for acquiring the imaging data; and
   the positional deviation correction device.

### Advantageous Effects

According to at least one embodiment of the present disclosure, the position of meat can be corrected even if the position of the meat deviates during meat processing.

### BRIEF DESCRIPTION OF DRAWINGS

FIG. 1 is a diagram showing a meat processing apparatus according to an embodiment.
FIG. 2A is a diagram showing a configuration related to detection of the presence or absence of a positional deviation of a workpiece and correction of the positional deviation of the workpiece, among functional configurations of a control device according to an embodiment.
FIG. 2B is a diagram showing a functional configuration of a position estimation device according to an embodiment.
FIG. 3 is a diagram showing an example of a captured image, which is imaging data obtained by imaging with a color camera.
FIG. 4 is a diagram for describing position information of a workpiece estimated using a trained model.
FIG. 5 is a diagram showing an example of a captured image during processing of a workpiece.
FIG. 6A is a diagram showing an example of a case where the position of a workpiece at the latest time deviates downstream in a conveyance direction of the workpiece by a conveyance device with respect to the position of the workpiece at the reference time.
FIG. 6B is a diagram showing an example of a case where the position of a workpiece at the latest time deviates upstream in the conveyance direction of the workpiece by the conveyance device with respect to the position of the workpiece at the reference time.
FIG. 6C is a diagram showing an example of a case where the position of a workpiece at the latest time deviates in a conveyor width direction with respect to the position of the workpiece at the reference time.
FIG. 7 is a flowchart showing the procedure of a process related to detection of a positional deviation of a workpiece and correction of the positional deviation implemented by a control device of an embodiment.
FIG. 8 is a flowchart showing the procedure of a process for acquiring position information of a workpiece implemented by a position estimation device of an embodiment.
FIG. 9 is a flowchart showing the procedure of a deviation determination process implemented by a control device of an embodiment.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

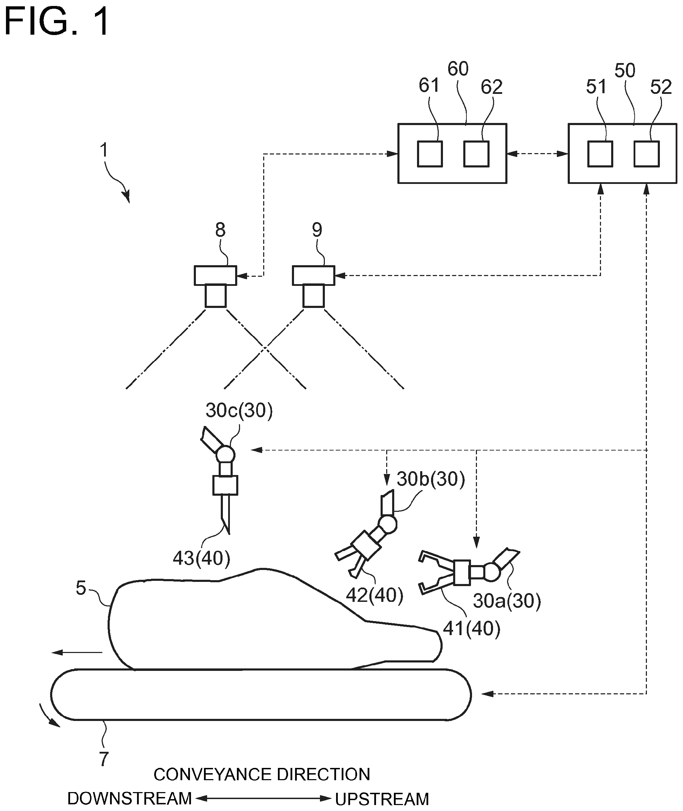

FIG. 1 is a diagram showing a meat processing apparatus 1 according to an embodiment. The meat processing apparatus 1 according to an embodiment is an apparatus for processing meat (workpiece 5) using a tool 40.

The meat processing apparatus 1 according to an embodiment includes a conveyance device 7 for conveying the workpiece 5, a robot arm 30 for processing the workpiece 5, a color camera 8 and a 3D camera 9 for capturing an image of the workpiece 5, a control device 50 for controlling the robot arm 30 and the conveyance device 7, and a position estimation device 60 for estimating the position of the workpiece 5. The control device 50 and the position estimation device 60 may be different devices or the same device.

The conveyance device 7 according to an embodiment is a belt conveyor that conveys the workpiece 5.

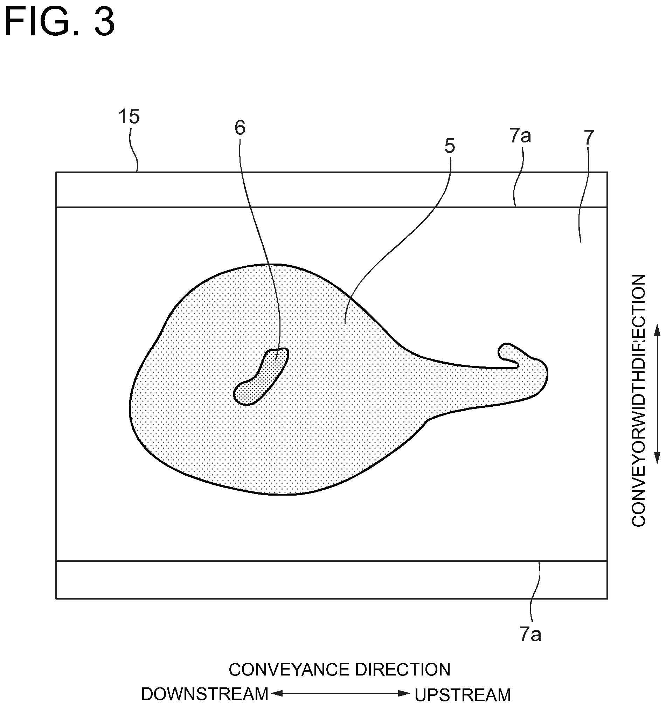

The color camera 8 according to an embodiment is an imaging device used to estimate the position of the workpiece 5 during processing as described later, and is provided so as to capture an image of the workpiece 5 from above. In this embodiment, a captured image 15 (see FIG. 3 described later) obtained by imaging with the color camera 8 is an image in plan view.

The 3D camera 9 according to an embodiment is an imaging device for acquiring the three-dimensional shape of the workpiece 5 used for specifying a processing position of the workpiece 5, and is provided so as to capture an image of the workpiece 5 from above.

The configuration of the robot arm 30 will be described. The robot arm 30 according to an embodiment is an industrial robot. More specifically, for example, the robot arm 30 is an articulated robot. The robot arm 30 may be a vertical articulated robot, a horizontal articulated robot, or a combination thereof.

In an embodiment, the robot arm 30 is equipped with the tool 40 for processing the workpiece 5.

The robot arm 30 according to an embodiment includes robot arms 30a, 30b, and 30c.

For example, the tool 40 according to an embodiment includes a clamper 41 for clamping and fixing the workpiece 5, a chuck 42 for chucking the workpiece 5, and a knife 43 for cutting the workpiece 5.

For example, in an embodiment, the clamper 41 is attached to the robot arm 30a, and the chuck 42 and the knife 43 are attached to the robot arm 30b or the robot arm 30c.

The clamper 41 and the chuck 42 according to an embodiment are opened and closed by a drive mechanism. In an embodiment, an air cylinder (not shown) is used as the drive mechanism. In this case, the inlet and outlet provided in each of the clamper 41 and the chuck 42 are connected to the air cylinder via air pipes. A hydraulic cylinder or a motor may be used as the drive mechanism.

The meat processing apparatus 1 is not limited to having a plurality of robot arms 30. A single robot arm 30 may be selectively equipped with multiple types of tools 40 or only one tool 40.

The control device 50 according to an embodiment includes a processor 51 that executes various calculation processes, and a memory 52 that non-temporarily or temporarily stores various data processed by the processor 51. The processor 51 is implemented by CPU, GPU, MPU, DSP, NPU (Neural Processing Unit), various other computing devices, a combination thereof, or the like. The memory 52 is implemented by ROM, RAM, a flash memory, a combination thereof, or the like.

In the following description, regarding the control contents of the control device 50, detection of the presence or absence of a positional deviation of the workpiece 5 during processing and correction of the positional deviation of the workpiece 5 will be mainly described.

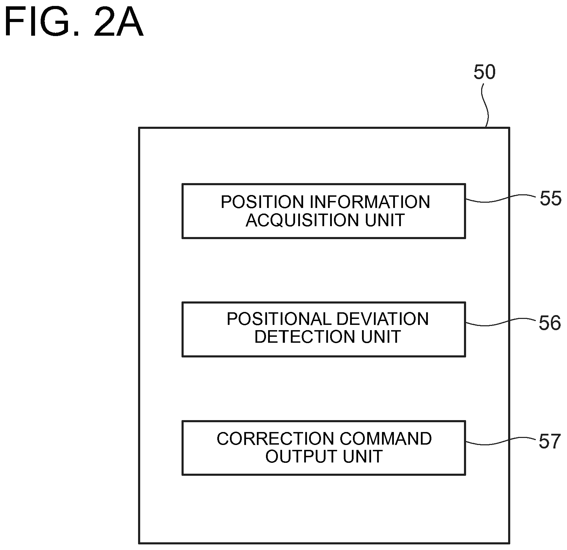

FIG. 2A is a diagram showing a configuration related to detection of the presence or absence of a positional deviation of the workpiece 5 and correction of the positional deviation of the workpiece 5, among the functional configurations of the control device 50 according to an embodiment. The control device 50 according to an embodiment includes, as functional configurations, a position information acquisition unit 55, a positional deviation detection unit 56, and a correction command output unit 57.

The position information acquisition unit 55 is configured to acquire position information of the workpiece 5 in time-series imaging data including the workpiece 5 during processing, that is, in which the workpiece 5 during processing is imaged.

The positional deviation detection unit 56 is configured to detect the presence or absence of a positional deviation of the workpiece 5 during processing based on a difference between position information of the workpiece 5 at a reference time, which will be described later, and position information of the workpiece 5 at the latest time.

The correction command output unit 57 is configured to output a control command to correct the position of the workpiece 5 to a positional deviation correction device for correcting the positional deviation of the workpiece 5 when the positional deviation detection unit 56 detects the positional deviation of the workpiece 5. In the meat processing apparatus 1 according to an embodiment, the positional deviation correction device is the robot arm 30, but it may be a dedicated device for correcting the position of the workpiece 5.

The control contents of the control device 50 will be described in detail later.

The position estimation device 60 according to an embodiment includes a processor 61 that executes various calculation processes, and a memory 62 that non-temporarily or temporarily stores various data processed by the processor 61. The processor 61 is implemented by CPU, MPU, DSP, various other computing devices, a combination thereof, or the like, and GPU or NPU. The memory 62 is implemented by ROM, RAM, a flash memory, a combination thereof, or the like.

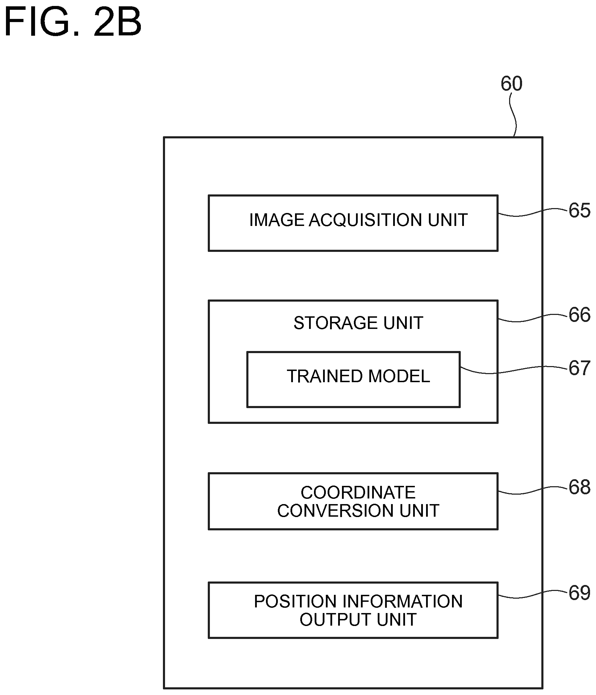

FIG. 2B is a diagram showing a functional configuration of the position estimation device 60 according to an embodiment. The position estimation device 60 according to an embodiment includes, as functional configurations, an image acquisition unit 65, a storage unit 66, a coordinate conversion unit 68, and a position information output unit 69.

The image acquisition unit 65 is configured to acquire imaging data (image) obtained by imaging with the color camera 8.

The storage unit 66 is configured to store various data required for the calculation processes of the position estimation device 60, and stores, for example, a trained model 67 used for estimation of position information described later. The trained model 67 is a predictive model for estimating the position information of the workpiece 5 based on input imaging data acquired by the image acquisition unit 65, and is capable of estimating the position of the workpiece 5 in the imaging data.

The coordinate conversion unit 68 is configured to convert coordinate values in the imaging data, which are the position information of the workpiece 5 estimated by the trained model 67, into coordinate values in a coordinate system related to the control of the robot arm 30.

The position information output unit 69 is configured to output the position information of the workpiece 5 after conversion by the coordinate conversion unit 68 to the position information acquisition unit 55 of the control device 50.

The control contents of the position estimation device 60 will be described in detail later.

In the meat processing apparatus 1 according to an embodiment configured as described above, the control device 50 drives the conveyance device 7 to convey the workpiece 5 to a predetermined position, and then stops the conveyance device 7.

Then, the control device 50 causes the 3D camera 9 to image the workpiece 5 on the conveyance device 7, and controls the robot arm 30 to process the workpiece 5 based on the obtained imaging data. More specifically, the control device 50 specifies a processing position for the workpiece 5 based on the image obtained by imaging with the 3D camera 9, and controls the robot arm 30 based on the specified result.

The workpiece 5 on the conveyance device 7 is subjected to processing such as cutting with the knife 43 by the robot arm 30c equipped with the knife 43, or grasping and removing the bone with the chuck 42 by the robot arm 30b equipped with the chuck 42. During the processing of the workpiece 5, the workpiece 5 may be clamped with the clamper 41 by the robot arm 30a equipped with the clamper 41 and fixed on the conveyance device 7.

When the processing of the workpiece 5 is completed, the control device 50 drives the conveyance device 7 to convey the workpiece 5 to the next process.

In the meat processing apparatus 1 according to an embodiment, if the workpiece 5 moves undesirably and its position deviates during processing of the workpiece 5, the trajectory of the tool 40 moved by the robot arm 30 will deviate with respect to the workpiece 5, and there is a possibility that processing will not be performed as desired.

Therefore, in the meat processing apparatus 1 according to an embodiment, the presence or absence of a positional deviation of the workpiece 5 is detected during processing of the workpiece 5, and if a positional deviation of the workpiece 5 is detected, the positional deviation of the workpiece 5 is corrected. Hereinafter, the detection of the positional deviation of the workpiece 5 will be described in detail.

During processing of the workpiece 5, the control device 50 according to an embodiment repeatedly transmits an imaging command to the position estimation device 60 so as to repeatedly image the workpiece 5. During processing of the workpiece 5, the control device 50 transmits the imaging command to the position estimation device 60, for example, every 300 ms.

The position estimation device 60 transmits an imaging command to the color camera 8 every time the imaging command is input. The control device 50 may be configured to directly transmit the imaging command to the color camera 8.

The color camera 8 according to an embodiment captures an image of the workpiece 5 every time the imaging command is input. Thus, time-series imaging data including the workpiece 5, that is, in which the workpiece 5 is imaged, is obtained. The color camera 8 transmits the imaging data obtained every time the workpiece 5 is imaged to the position estimation device 60.

FIG. 3 is a diagram showing an example of the captured image 15, which is imaging data obtained by imaging with the color camera 8. The whole or a part of the workpiece 5 on the conveyance device 7 is contained in the captured image 15. The angle of view of the color camera 8 is preferably set so that both ends 7a of the belt conveyor, which is the conveyance device 7, in a conveyor width direction, which is a direction orthogonal to the conveyance direction, are contained in the captured image 15.

The position estimation device 60 according to an embodiment acquires position information of the workpiece 5 based on the imaging data transmitted from the color camera 8. Specifically, every time imaging data from the color camera 8 is input to the image acquisition unit 65, the processor 61 of the position estimation device 60 according to an embodiment inputs the imaging data acquired by the image acquisition unit 65 to the trained model 67 stored in the storage unit 66, and obtains a prediction result of the position of the workpiece 5 in the imaging data.

The processor 61 may be configured to input, to the trained model 67 stored in the storage unit 66, text data "meat" representing the workpiece 5 (meat) that is the target of position prediction, together with the imaging data acquired by the image acquisition unit 65.

By using the trained model 67, the processor 61 according to an embodiment estimates the position of the workpiece 5 in the input imaging data, specifies an area where the presence of the workpiece 5 is estimated in the input imaging data as a rectangular area surrounded by a rectangular frame, and outputs information on the position and size of the specified rectangular area as position information of the workpiece 5 together with the imaging data to the coordinate conversion unit 68.

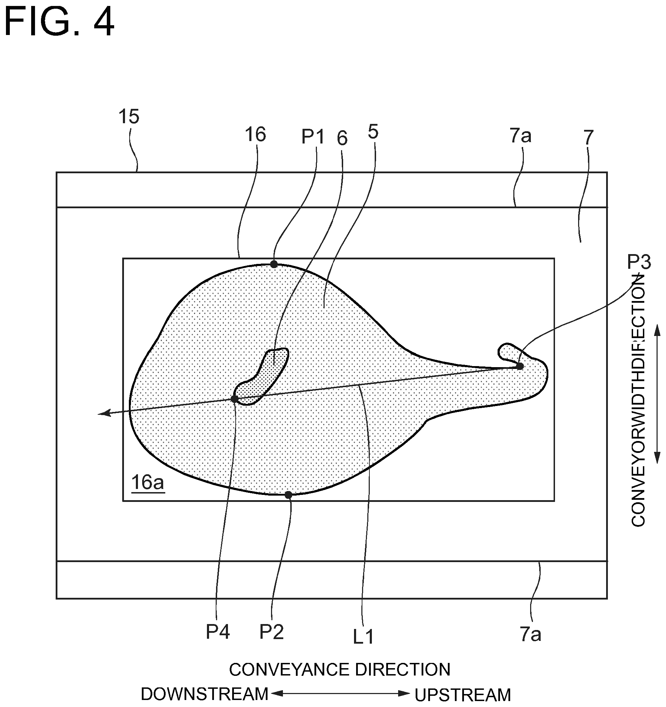

FIG. 4 is a diagram for explaining position information of the workpiece 5 estimated using the trained model 67. A rectangular frame 16 surrounding the workpiece 5 in FIG. 4 indicates a rectangular area 16a where the workpiece 5 is estimated to exist in the captured image 15.

FIG. 4 also shows contour points P1, P2, an ankle point P3, a bone point P4, and a line segment L1 connecting the ankle point P3 and the bone point P4 of the workpiece 5, which are referred to in the correction of the positional deviation of the workpiece 5 described later. These points P1 to P4 and the line segment L1 will be described later.

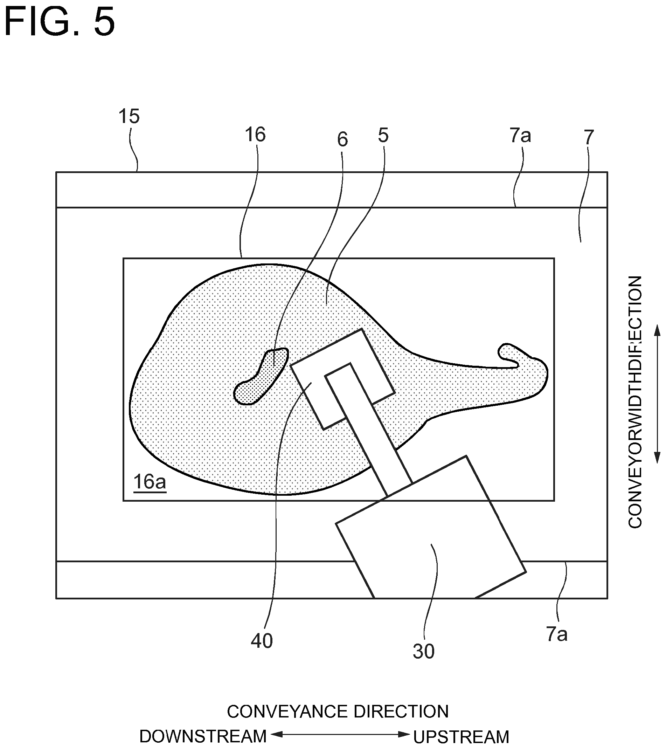

FIG. 5 is a diagram showing an example of the captured image 15 during processing of the workpiece 5. As shown in FIG. 5, during processing of the workpiece 5, the robot arm 30 and the tool 40 overlap the workpiece 5 in plan view.

In such a case, if one tries to estimate the position of the workpiece 5 by conventional image processing, the robot arm 30 and the tool 40 in the captured image 15 become obstacles, making it difficult to correctly estimate the position of the workpiece 5.

In the trained model 67 according to an embodiment, as shown in FIG. 5, even if the robot arm 30 and the tool 40 partly cover the workpiece 5 in the captured image 15, the position of the workpiece 5 can be estimated correctly.

The coordinate conversion unit 68 of the position estimation device 60 according to an embodiment converts the position information of the workpiece 5 estimated using the trained model 67, that is, coordinate values representing information on the position and size of the rectangular area 16a, into coordinate values in the coordinate system related to the control of the robot arm 30.

The position information output unit 69 of the position estimation device 60 according to an embodiment outputs the position information of the workpiece 5 after conversion by the coordinate conversion unit 68 to the position information acquisition unit 55 of the control device 50. The position information output unit 69 according to an embodiment outputs the position information of the workpiece 5 after conversion by the coordinate conversion unit 68 to the position information acquisition unit 55 of the control device 50, for example, every 300 ms.

The position information acquisition unit 55 of the control device 50 according to an embodiment acquires the position information of the workpiece 5 output from the position information output unit 69 of the position estimation device 60.

After starting the processing of the workpiece 5, the positional deviation detection unit 56 of the control device 50 according to an embodiment temporarily stores the position information of the workpiece 5 first acquired by the position information acquisition unit 55 in the memory 52 as the position information of the workpiece 5 at the reference time.

Then, the positional deviation detection unit 56 compares the position information of the workpiece 5 sequentially acquired by the position information acquisition unit 55, that is, the position information of the workpiece 5 at the latest time, with the position information of the workpiece 5 at the reference time, and detects whether the position of the workpiece 5 at the latest time deviates with respect to the position of the workpiece 5 at the reference time, that is, detects the presence or absence of a positional deviation of the workpiece 5.

Details of positional deviation detection in the positional deviation detection unit 56 will be described later.

When it is determined in the positional deviation detection unit 56 that a positional deviation of the workpiece 5 has occurred, the correction command output unit 57 of the control device 50 according to an embodiment outputs to the robot arm 30 a control command for correcting the position of the workpiece 5. For example, the correction command output unit 57 generates a control command for correcting the position of the workpiece 5 based on a difference between the position information of the workpiece 5 at the reference time temporarily stored in the memory 52 and the position information of the workpiece 5 at the latest time, and outputs the control command to the robot arm 30.

When it is determined in the positional deviation detection unit 56 that a positional deviation of the workpiece 5 has occurred, the processor 51 of the control device 50 according to an embodiment temporarily stops the processing of the workpiece 5. Thereafter, in order to grasp the accurate position of the workpiece 5 that has deviated, the processor 51 controls the robot arm 30 so as to completely retract the robot arm 30 from the imaging angle of view of the 3D camera 9, and then causes the 3D camera 9 to image the workpiece 5 on the conveyance device 7. The processor 51 specifies the position of the workpiece 5 that has deviated based on the image obtained by imaging with the 3D camera 9.

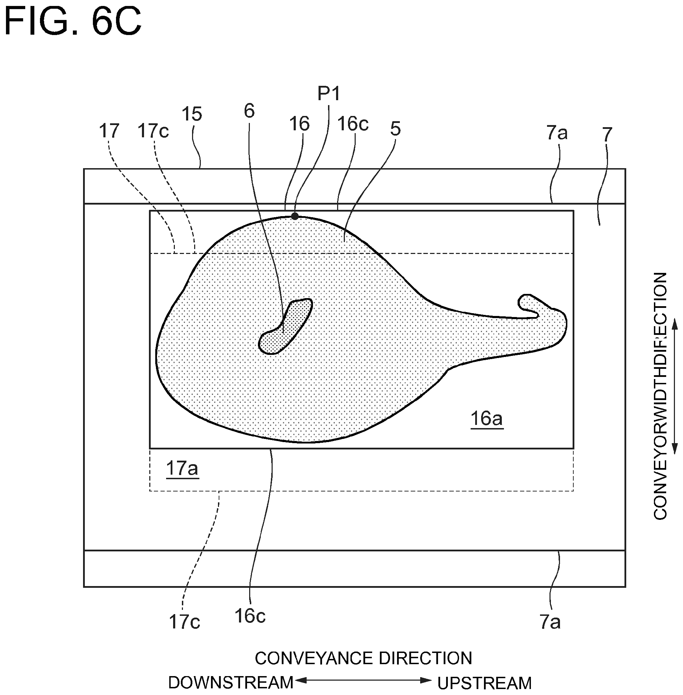

Further, the processor 51 detects, for example, the contour points P1 and P2 of the workpiece 5 shown in FIG. 4 based on the image obtained by imaging with the 3D camera 9. The contour point P1 is, for example, a point on the outer edge of the workpiece 5 closest to one of a pair of sides of the rectangular area 16a parallel to the conveyance direction (corresponding to a pair of sides 16c in FIG. 6C described later). The contour point P2 is, for example, a point on the outer edge of the workpiece 5 closest to the other of the pair of sides of the rectangular area 16a parallel to the conveyance direction. The ankle point P3 is a point detected as an ankle when the workpiece 5 is a leg. The bone point P4 is, for example, a point detected as a characteristic point among parts detected as the bone 6 exposed on the upper surface of the workpiece 5.

The line segment L1 is, for example, a line segment connecting the ankle point P3 and the bone point P4.

Based on the specified position, each point P1 to P4, and the line segment L1, the correction command output unit 57 generates a control command for correcting the position of the workpiece 5 and outputs it to the robot arm 30. The control command generated by the correction command output unit 57 will be described later.

Thus, the robot arm 30 corrects the position of the workpiece 5 by, for example, pressing the workpiece 5 with the tool 40.

Thereafter, the processor 51 causes the 3D camera 9 to image the workpiece 5 on the conveyance device 7 again, and resumes the processing of the workpiece 5 by controlling the robot arm 30 based on the obtained imaging data.

After resuming the processing of the workpiece 5, if it is determined in the positional deviation detection unit 56 that a positional deviation of the workpiece 5 has occurred, the above-described correction of the position of the workpiece 5 is performed again.

However, when the processor 51 determines that the number of occurrences of the positional deviation for one workpiece 5 has exceeded a predetermined number of times, it ends the processing for this workpiece 5.

### (Positional Deviation Detection of Workpiece 5 in Positional Deviation Detection Unit 56)

Positional deviation detection of the workpiece 5 in the positional deviation detection unit 56 will be described below.

It is known that when the robot arm 30 or the tool 40 partly covers the workpiece 5 in the captured image 15, the size and position of the rectangular frame 16 surrounding the workpiece 5 shown in FIG. 4, which is the position information of the workpiece 5 obtained by estimation with the trained model 67, fluctuates slightly. Therefore, in the control device 50 according to an embodiment, the positional deviation detection unit 56 determines that a positional deviation of the workpiece 5 has occurred when the difference between the position information of the workpiece 5 sequentially acquired by the position information acquisition unit 55, that is, the position information of the workpiece 5 at the latest time, and the position information of the workpiece 5 at the reference time is equal to or greater than a certain magnitude.

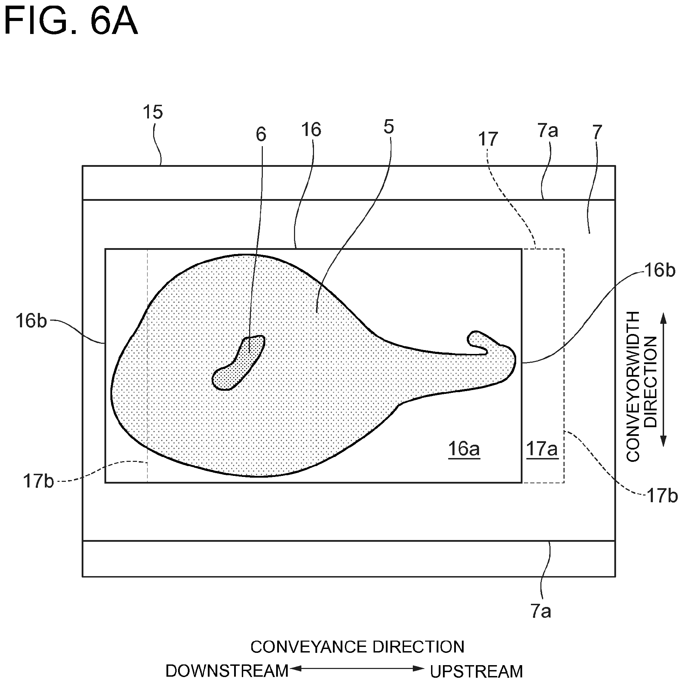

FIG. 6A is a diagram showing an example of a case where the position of the workpiece 5 at the latest time deviates downstream in the conveyance direction of the workpiece 5 by the conveyance device 7 with respect to the position of the workpiece 5 at the reference time.

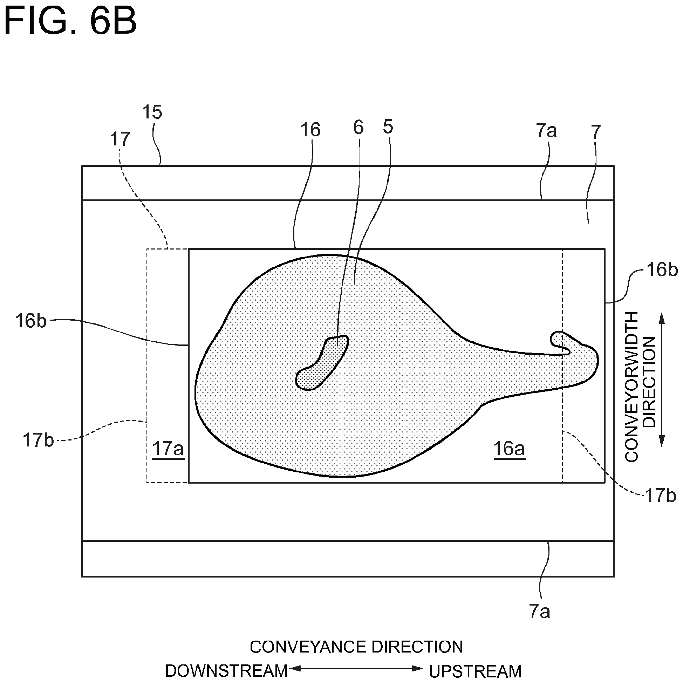

FIG. 6B is a diagram showing an example of a case where the position of the workpiece 5 at the latest time deviates upstream in the conveyance direction of the workpiece 5 by the conveyance device 7 with respect to the position of the workpiece 5 at the reference time.

FIG. 6C is a diagram showing an example of a case where the position of the workpiece 5 at the latest time deviates in the conveyor width direction with respect to the position of the workpiece 5 at the reference time. FIG. 6C shows an example of a case where the position of the workpiece 5 at the latest time deviates upward in the drawing in the conveyor width direction with respect to the position of the workpiece 5 at the reference time.

In FIGs. 6A, 6B, and 6C, a frame 17 shown by the broken line indicates a rectangular area 17a of the position information of the workpiece 5 at the reference time.

As shown in FIG. 6A, for example, the positional deviation detection unit 56 according to an embodiment detects a positional deviation when determining that a pair of sides 16b of the rectangular area 16a facing each other in the conveyance direction of the workpiece 5 in the position information of the workpiece 5 at the latest time has deviated downstream in the conveyance direction by at least a threshold Th1 included in determination criteria, which will be described later, with respect to the position of a pair of sides 17b of the rectangular area 17a facing each other in the conveyance direction of the workpiece 5 in the position information of the workpiece 5 at the reference time for a predetermined number of consecutive times N1 or more.

As shown in FIG. 6B, for example, the positional deviation detection unit 56 according to an embodiment detects a positional deviation when determining that a pair of sides 16b of the rectangular area 16a facing each other in the conveyance direction of the workpiece 5 in the position information of the workpiece 5 at the latest time has deviated upstream in the conveyance direction by at least a threshold Th2 included in the determination criteria, which will be described later, with respect to the position of a pair of sides 17b of the rectangular area 17a facing each other in the conveyance direction of the workpiece 5 in the position information of the workpiece 5 at the reference time for a predetermined number of consecutive times N2 or more.

As shown in FIG. 6C, for example, the positional deviation detection unit 56 according to an embodiment detects a positional deviation when determining that a pair of sides 16c of the rectangular area 16a facing each other in the conveyor width direction in the position information of the workpiece 5 at the latest time has deviated in the same direction by at least a threshold Th3 included in the determination criteria, which will be described later, with respect to the position of a pair of sides 17c of the rectangular area 17a facing each other in the conveyor width direction in the position information of the workpiece 5 at the reference time for a predetermined number of consecutive times N3 or more.

The determination criteria include the above-described thresholds Th (Th1, Th2, Th3) and the predetermined number of times N (N1, N2, N3), and are stored in advance in the memory 52 of the control device 50. The above-described thresholds Th and predetermined number of times N are values set in advance respectively according to the type of the workpiece 5 (that is, the meat part such as leg, belly, shoulder, arm, or the like), the processing form such as scoring or cutting, the progress stage of processing, etc. Hereinafter, these thresholds Th and predetermined numbers of times N are also referred to as positional deviation detection parameters.

As the processing form, for example, if the workpiece 5 is a leg, examples include processing for deboning only the hip bone, processing for deboning the hip bone and the femur, and processing for complete deboning including the lower leg bone. As the processing form, for example, if the workpiece 5 is a belly, examples include processing for separating the ribs into a sheet shape and processing for deboning the ribs one by one. As the processing form, for example, if the workpiece 5 is a shoulder, examples include processing for integrally separating the bone and the shoulder loin, and processing for deboning only the bone.

In this way, the positional deviation detection unit 56 according to an embodiment detects a positional deviation when determining that the difference between the position information of the workpiece 5 at the reference time and the position information of the workpiece 5 at the latest time has been equal to or greater than the threshold Th included in the determination criteria stored in the memory 52 of the control device 50 for a predetermined number of consecutive times N or more.

### (Flowchart)

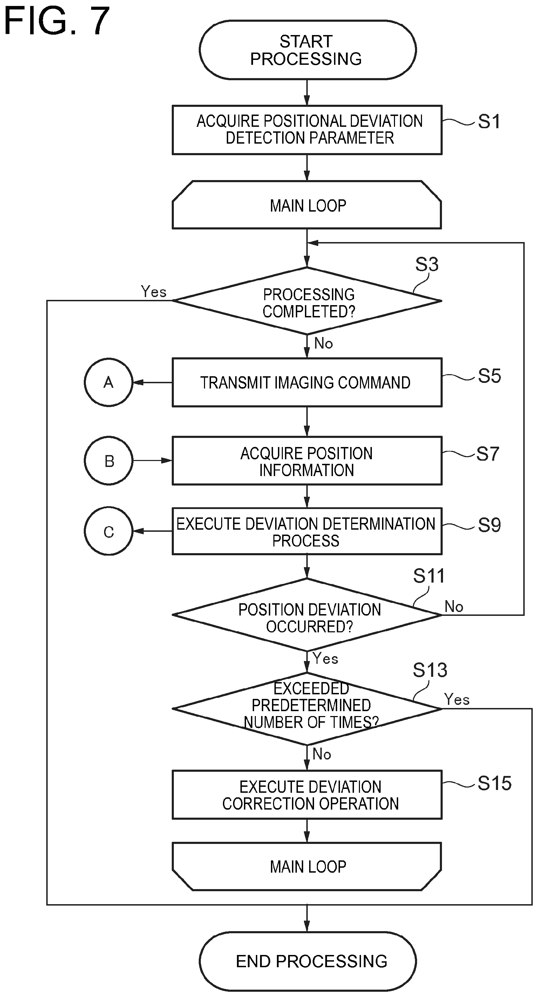

FIG. 7 is a flowchart showing the procedure of a process related to detection of a positional deviation of the workpiece 5 and correction of the positional deviation in the meat processing implemented by the control device 50 according to an embodiment. A program for executing the process shown in the flowchart of FIG. 7 is read from the memory 52 and executed by the processor 51.

When processing of the workpiece 5 starts, in step S1, the processor 51 acquires the positional deviation detection parameters from the memory 52 and proceeds to step S3 of a main loop.

The processor 51 reads from the memory 52 and executes a program for processing the workpiece 5, which is separate from the program for executing the process described below. Specifically, the processor 51 causes the 3D camera 9 to image the workpiece 5 conveyed to a predetermined position by the conveyance device 7, and controls the robot arm 30 to process the workpiece 5 based on the obtained imaging data.

In step S3, the processor 51 determines whether the processing of the workpiece 5 is completed, that is, whether all processes for processing the workpiece 5 have been implemented.

When determining that the processing of the workpiece 5 is completed, the processor 51 ends the process shown in the flowchart of FIG. 7.

When determining that processing of the workpiece 5 is not completed, in step S5, the processor 51 transmits an imaging command to the position estimation device 60.

Thereafter, in step S7, the position information acquisition unit 55 of the control device 50 acquires the position information of the workpiece 5 from the position information output unit 69 of the position estimation device 60.

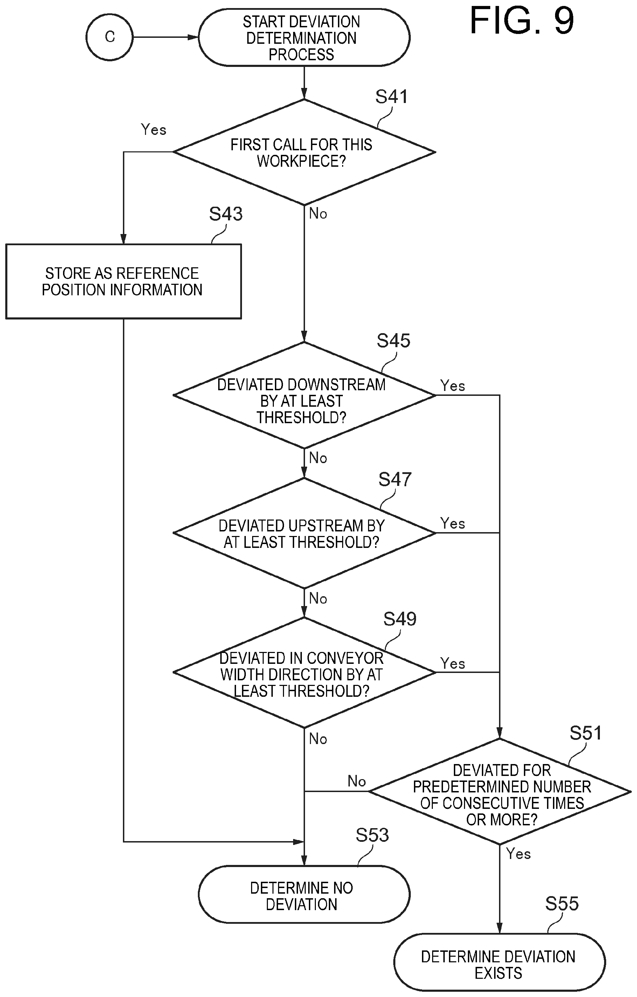

Next, in step S9, the positional deviation detection unit 56 of the control device 50 executes a deviation determination process shown in FIG. 9, which will be described later.

Next, in step S11, the positional deviation detection unit 56 determines whether it has been determined in the deviation determination process shown in FIG. 9 that a positional deviation of the workpiece 5 has occurred.

When determining that a positional deviation of the workpiece 5 has not occurred, that is, when a negative determination is made in step S11, the processor 51 returns to the beginning of the main loop, that is, to step S3.

When determining that a positional deviation of the workpiece 5 has occurred, that is, when an affirmative determination is made in step S11, the process proceeds to step S13, and the processor 51 determines whether the number of times it has been determined that a positional deviation has occurred for one workpiece 5 has exceeded a predetermined number of times.

When an affirmative determination is made in step S13, that is, when it is determined that the number of times it has been determined that a positional deviation has occurred for one workpiece 5 has exceeded the predetermined number of times, the processor 51 ends the process shown in the flowchart of FIG. 7.

When a negative determination is made in step S13, that is, when it is determined that the number of times it has been determined that a positional deviation has occurred for one workpiece 5 has not exceeded the predetermined number of times, the process proceeds to step S15, and the correction command output unit 57 of the control device 50 causes the robot arm 30 to perform a deviation correction operation for correcting the position of the workpiece 5.

Specifically, when a negative determination is made in step S13, the process proceeds to step S15, and the processor 51 temporarily stops the processing of the workpiece 5 performed by a program separate from this program. Thereafter, in order to grasp the accurate position of the workpiece 5 that has deviated, as described above, the processor 51 controls the robot arm 30 so as to completely retract the robot arm 30 from the imaging angle of view of the 3D camera 9, and then causes the 3D camera 9 to image the workpiece 5 on the conveyance device 7. The processor 51 specifies the position of the workpiece 5 that has deviated based on the image obtained by imaging with the 3D camera 9.

Further, the processor 51 detects the points P1 to P4 shown in FIG. 4 or calculates the line segment L1 based on the image obtained by imaging with the 3D camera 9.

The correction command output unit 57 outputs a control command for correcting the position of the workpiece 5 to the robot arm 30 based on the specified position, each point P1 to P4, and the line segment L1.

For example, as shown in FIG. 6C, when it is detected that the contour point P1 is located outward in the conveyor width direction (the upper side in the figure) beyond the upper side 17c of the pair of sides 17c of the rectangular area 17a, the correction command output unit 57 generates a control command to correct the position of the workpiece 5 so as to return the contour point P1 inward in the conveyor width direction (the lower side in the figure) relative to the upper side 17c, and outputs the control command to the robot arm 30.

Although not shown, when it is detected that the contour point P2 is located outward in the conveyor width direction (the lower side in the figure) beyond the lower side 17c of the pair of sides 17c of the rectangular area 17a, the correction command output unit 57 generates a control command to correct the position of the workpiece 5 so as to return the contour point P2 inward in the conveyor width direction (the upper side in the figure) relative to the lower side 17c, and outputs the control command to the robot arm 30.

For example, when it is detected that the ankle point P3 has moved away from the position near the center of the rectangular area 17a in the conveyor width direction, the correction command output unit 57 generates a control command for correcting the position of the workpiece 5 so as to bring the ankle point P3 closer to the vicinity of the center of the rectangular area 17a in the conveyor width direction, and outputs the control command to the robot arm 30.

For example, when it is detected that the calculated inclination of the line segment L1 deviates from a predetermined inclination, the correction command output unit 57 combines the contents of positional deviation correction based on the positions of the contour points P1 and P2 and the contents of positional deviation correction based on the position of the ankle point P3 described above to generate a control command for correcting the position of the workpiece 5 so that the inclination of the line segment L1 approaches the predetermined inclination, and outputs the control command to the robot arm 30.

Based on the above control command, the robot arm 30 corrects the position of the workpiece 5 by, for example, pressing the workpiece 5 with the tool 40.

Thereafter, as described above, the processor 51 causes the 3D camera 9 to image the workpiece 5 on the conveyance device 7 again, and resumes the processing of the workpiece 5, which was being performed by a program separate from this program, based on the obtained imaging data.

When step S15 is executed, the processor 51 returns to the beginning of the main loop, that is, to step S3.

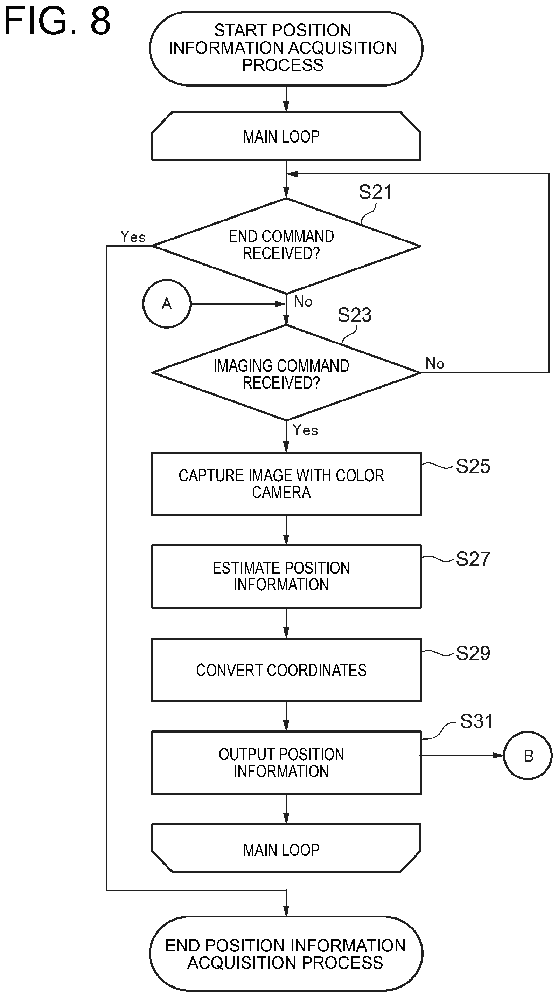

FIG. 8 is a flowchart showing the procedure of a process for acquiring position information of the workpiece 5 implemented by the position estimation device 60 according to an embodiment. A program for executing the process shown in the flowchart of FIG. 8 is read from the memory 62 and executed by the processor 61.

When processing of the workpiece 5 starts, in step S21, the processor 61 determines whether an end command for notifying that the processing of the workpiece 5 is completed has been received from the control device 50. When the processor 51 of the control device 50 ends the process shown in the flowchart of FIG. 7, it outputs the end command to the position estimation device 60.

When an affirmative determination is made in step S21, that is, when it is determined that the end command has been received, the processor 61 ends the process shown in the flowchart of FIG. 8.

When a negative determination is made in step S21, that is, when it is determined that the end command has not been received, the process proceeds to step S23, and the processor 61 determines whether an imaging command has been received from the control device 50.

When a negative determination is made in step S23, that is, when it is determined that the imaging command has not been received, the processor 61 returns to the beginning of the main loop, that is, to step S21.

When an affirmative determination is made in step S23, that is, when it is determined that the imaging command has been received, the process proceeds to step S25, and the processor 61 transmits an imaging command to the color camera 8 to cause the color camera 8 to image. Thus, imaging data obtained by imaging with the color camera 8 is transmitted to the image acquisition unit 65 of the position estimation device 60.

Next, in step S27, the processor 61 inputs the imaging data acquired by the image acquisition unit 65 to the trained model 67 stored in the storage unit 66, and obtains a prediction result of the position of the workpiece 5 in the imaging data.

Next, in step S29, the coordinate conversion unit 68 of the position estimation device 60 converts the position information of the workpiece 5 estimated using the trained model 67, that is, coordinate values representing information on the position and size of the rectangular area 16a, into coordinate values in the coordinate system related to the control of the robot arm 30.

Next, in step S31, the position information output unit 69 of the position estimation device 60 outputs the position information of the workpiece 5 after conversion by the coordinate conversion unit 68 to the position information acquisition unit 55 of the control device 50.

When step S31 is executed, the processor 61 returns to the beginning of the main loop, that is, to step S21.

FIG. 9 is a flowchart showing the procedure of a deviation determination process implemented by the control device 50 according to an embodiment. A program for executing the process shown in the flowchart of FIG. 9 is read from the memory 52 and executed by the processor 51.

When the deviation determination process starts, in step S41, the positional deviation detection unit 56 determines whether it is the first call after the start of the deviation determination process.

When an affirmative determination is made in step S41, that is, when it is determined that it is the first call after the start of the deviation determination process, the process proceeds to step S43, and the positional deviation detection unit 56 temporarily stores the position information of the workpiece 5 acquired by the position information acquisition unit 55 in step S7 of FIG. 7 in the memory 52 as the position information of the workpiece 5 at the reference time.

When step S43 is executed, the process proceeds to step S53, and the positional deviation detection unit 56 determines that no positional deviation of the workpiece 5 has occurred.

When a negative determination is made in step S41, that is, when it is determined that it is not the first call after the start of the deviation determination process, the process proceeds to step S45, and as shown in FIG. 6A, for example, the positional deviation detection unit 56 determines whether the pair of sides 16b of the rectangular area 16a facing each other in the conveyance direction of the workpiece 5 in the position information of the workpiece 5 at the latest time deviates downstream in the conveyance direction by at least the threshold Th1 with respect to the position of the pair of sides 17b of the rectangular area 17a facing each other in the conveyance direction of the workpiece 5 in the position information of the workpiece 5 at the reference time.

When an affirmative determination is made in step S45, the process proceeds to step S51, and the positional deviation detection unit 56 determines whether the affirmative determination in step S45 has been made for the predetermined number of consecutive times N1 or more.

When an affirmative determination is made in step S51, the process proceeds to step S55, and the positional deviation detection unit 56 determines that a positional deviation of the workpiece 5 has occurred.

When a negative determination is made in step S51, the process proceeds to step S53, and the positional deviation detection unit 56 determines that no positional deviation of the workpiece 5 has occurred.

When a negative determination is made in step S45, the process proceeds to step S47, and as shown in FIG. 6B, for example, the positional deviation detection unit 56 determines whether the pair of sides 16b of the rectangular area 16a facing each other in the conveyance direction of the workpiece 5 in the position information of the workpiece 5 at the latest time deviates upstream in the conveyance direction by at least the threshold Th2 with respect to the position of the pair of sides 17b of the rectangular area 17a facing each other in the conveyance direction of the workpiece 5 in the position information of the workpiece 5 at the reference time.

When an affirmative determination is made in step S47, the process proceeds to step S51, and the positional deviation detection unit 56 determines whether the affirmative determination in step S47 has been made for the predetermined number of consecutive times N2 or more.

When an affirmative determination is made in step S51, the process proceeds to step S55, and the positional deviation detection unit 56 determines that a positional deviation of the workpiece 5 has occurred.

When a negative determination is made in step S51, the process proceeds to step S53, and the positional deviation detection unit 56 determines that no positional deviation of the workpiece 5 has occurred.

When a negative determination is made in step S47, the process proceeds to step S49, and as shown in FIG. 6C, for example, the positional deviation detection unit 56 determines whether the pair of sides 16c of the rectangular area 16a facing each other in the conveyor width direction in the position information of the workpiece 5 at the latest time deviates in the same direction by at least the threshold Th3 with respect to the position of the pair of sides 17c of the rectangular area 17a facing each other in the conveyor width direction in the position information of the workpiece 5 at the reference time.

When an affirmative determination is made in step S49, the process proceeds to step S51, and the positional deviation detection unit 56 determines whether the affirmative determination in step S49 has been made for the predetermined number of consecutive times N3 or more.

When an affirmative determination is made in step S51, the process proceeds to step S55, and the positional deviation detection unit 56 determines that a positional deviation of the workpiece 5 has occurred.

When a negative determination is made in step S51, the process proceeds to step S53, and the positional deviation detection unit 56 determines that no positional deviation of the workpiece 5 has occurred.

When a negative determination is made in step S49, the process proceeds to step S53, and the positional deviation detection unit 56 determines that no positional deviation of the workpiece 5 has occurred.

The present disclosure is not limited to the embodiments described above, but includes modifications to the embodiments described above, and embodiments composed of combinations of those embodiments.

The contents described in the above embodiments would be understood as follows, for instance.
(1) A control device 50 for a meat processing apparatus 1 according to at least one embodiment of the present disclosure includes:
   a position information acquisition unit 55 configured to acquire position information of meat (workpiece 5) in time-series imaging data (captured image 15) including the meat (workpiece 5) during meat processing;
   a positional deviation detection unit 56 configured to detect presence or absence of a positional deviation of the meat (workpiece 5) during the meat processing, based on a difference between the position information of the meat (workpiece 5) at a reference time and the position information of the meat (workpiece 5) at a latest time; and
   a correction command output unit 57 configured to, when the positional deviation detection unit 56 detects the positional deviation, output a control command to correct a position of the meat to a positional deviation correction device (robot arm 30) for correcting the positional deviation of the meat (workpiece 5).
   With the above configuration (1), even if the position of the meat (workpiece 5) deviates during processing of the meat (workpiece 5), the position of the meat (workpiece 5) can be corrected by the positional deviation correction device (robot arm 30).
(2) In some embodiments, in the above configuration (1), the control device may include a storage unit (memory 52) configured to store determination criteria for determining the presence or absence of the positional deviation corresponding to a part of the meat (workpiece 5), a processing form, and a progress status of processing. The positional deviation detection unit 56 may detect the presence or absence of the positional deviation based on the determination criteria stored in the storage unit (memory 52) and the difference between the position information of the meat (workpiece 5) at the reference time and the position information of the meat (workpiece 5) at the latest time.
   With the above configuration (2), detection accuracy of the presence or absence of the positional deviation can be improved.
(3) In some embodiments, in the above configuration (2), the positional deviation detection unit 56 may detect the positional deviation when determining that the difference between the position information of the meat (workpiece 5) at the reference time and the position information of the meat (workpiece 5) at the latest time has been equal to or greater than a threshold Th included in the determination criteria stored in the storage unit (memory 52) for a predetermined number of consecutive times N or more.
   With the above configuration (3), since it is determined that a positional deviation of the meat (workpiece 5) has occurred when there is a high possibility that a positional deviation of the meat (workpiece 5) has occurred, the detection accuracy of the presence or absence of the positional deviation can be improved.
(4) In some embodiments, in any one of the above configurations (1) to (3), the position information may be information indicating a position and a size of a rectangular area 16a, 17a which represents an area where the meat (workpiece 5) is present.
   With the above configuration (4), since the position and size of the area where the meat (workpiece 5) is present can be represented by a relatively simple shape, the calculation load for detecting the presence or absence of a positional deviation can be reduced, and the processing time for detecting the presence or absence of a positional deviation can be shortened.
(5) In some embodiments, in the above configuration (3), the position information may be information indicating a position and a size of a rectangular area 16a, 17a which represents an area where the meat (workpiece 5) is present. The positional deviation detection unit 56 may detect the positional deviation when determining that a pair of sides 16b of the rectangular area 16a facing each other in a conveyance direction of the meat (workpiece 5) in the position information of the meat (workpiece 5) at the latest time has deviated downstream in the conveyance direction by at least the threshold Th1 included in the determination criteria with respect to the position of a pair of sides 17b of the rectangular area 17a facing each other in the conveyance direction of the meat (workpiece 5) in the position information of the meat (workpiece 5) at the reference time for a predetermined number of consecutive times N1 or more.
   With the above configuration (5), since it is determined that a positional deviation of the meat (workpiece 5) has occurred when there is a high possibility that a positional deviation of the meat (workpiece 5) has occurred, the detection accuracy of the presence or absence of the positional deviation can be improved.
(6) In some embodiments, in the above configuration (3), the position information may be information indicating a position and a size of a rectangular area 16a, 17a which represents an area where the meat (workpiece 5) is present. The positional deviation detection unit 56 may detect the positional deviation when determining that a pair of sides 16b of the rectangular area 16a facing each other in a conveyance direction of the meat (workpiece 5) in the position information of the meat (workpiece 5) at the latest time has deviated upstream in the conveyance direction by at least the threshold Th2 included in the determination criteria with respect to the position of a pair of sides 17b of the rectangular area 17a facing each other in the conveyance direction of the meat (workpiece 5) in the position information of the meat (workpiece 5) at the reference time for a predetermined number of consecutive times N2 or more.
   With the above configuration (6), since it is determined that a positional deviation of the meat (workpiece 5) has occurred when there is a high possibility that a positional deviation of the meat (workpiece 5) has occurred, the detection accuracy of the presence or absence of the positional deviation can be improved.
(7) In some embodiments, in the above configuration (3), the position information may be information indicating a position and a size of a rectangular area 16a, 17a which represents an area where the meat (workpiece 5) is present. The positional deviation detection unit 56 may detect the positional deviation when determining that a pair of sides 16c of the rectangular area 16a facing each other in a direction (conveyor width direction) orthogonal to a conveyance direction of the meat (workpiece 5) in the position information of the meat (workpiece 5) at the latest time has deviated in the same direction by at least the threshold Th3 included in the determination criteria with respect to the position of a pair of sides 17c of the rectangular area 17a facing each other in the direction (conveyor width direction) orthogonal to the conveyance direction in the position information of the meat (workpiece 5) at the reference time for a predetermined number of consecutive times N3 or more.
   With the above configuration (7), since it is determined that a positional deviation of the meat (workpiece 5) has occurred when there is a high possibility that a positional deviation of the meat (workpiece 5) has occurred, the detection accuracy of the presence or absence of the positional deviation can be improved.
(8) In some embodiments, in any one of the above configurations (1) to (7), the position information acquisition unit 55 may acquire the position information from a trained model 67 for estimating the position information from the imaging data (captured image 15).
   With the above configuration (8), relatively highly accurate position information of the meat (workpiece 5) can be acquired from the imaging data (captured image 15) including the meat (workpiece 5) during meat processing.
(9) In some embodiments, in any one of the above configurations (1) to (8), the imaging data (captured image 15) may be imaging data (captured image 15) obtained by imaging the meat (workpiece 5) during the meat processing from above.
   With the above configuration (9), the position information of the meat (workpiece 5) can be acquired based on the imaging data (captured image 15) obtained by imaging the meat (workpiece 5) during meat processing from above, which is relatively easy to image.
(10) A meat processing apparatus 1 according to at least one embodiment of the present disclosure includes:
   the control device 50 having any one of the above configurations (1) to (9);
   a conveyor device (conveyance device 7) for conveying the meat (workpiece 5);
   an imaging device (color camera 8) for acquiring the imaging data (captured image 15); and
   the positional deviation correction device (robot arm 30).

With the above configuration (10), even if the position of the meat (workpiece 5) deviates during processing of the meat (workpiece 5), the position of the meat (workpiece 5) can be corrected by the positional deviation correction device (robot arm 30).

### Reference Signs List

- 1: Meat processing apparatus
- 5: Workpiece
- 7: Conveyance device
- 8: Color camera
- 15: Captured image
- 30: Robot arm
- 40: Tool
- 50: Control device
- 60: Position estimation device

## Claims

1. A control device for a meat processing apparatus, comprising:
a position information acquisition unit configured to acquire position information of meat in time-series imaging data including the meat during meat processing;
a positional deviation detection unit configured to detect presence or absence of a positional deviation of the meat during the meat processing, based on a difference between the position information of the meat at a reference time and the position information of the meat at a latest time; and
a correction command output unit configured to, when the positional deviation detection unit detects the positional deviation, output a control command to correct a position of the meat to a positional deviation correction device for correcting the positional deviation of the meat.

2. The control device for a meat processing apparatus according to claim 1, further comprising:
a storage unit configured to store determination criteria for determining the presence or absence of the positional deviation, the determination criteria corresponding to a part of the meat, a processing form, and a progress status of processing, wherein
the positional deviation detection unit detects the presence or absence of the positional deviation based on the determination criteria stored in the storage unit and the difference between the position information of the meat at the reference time and the position information of the meat at the latest time.

3. The control device for a meat processing apparatus according to claim 2, wherein
the positional deviation detection unit detects the positional deviation when determining that the difference between the position information of the meat at the reference time and the position information of the meat at the latest time has been equal to or greater than a threshold included in the determination criteria stored in the storage unit for a predetermined number of consecutive times or more.

4. The control device for a meat processing apparatus according to any one of claims 1 to 3, wherein
the position information is information indicating a position and a size of a rectangular area which represents an area where the meat is present.

5. The control device for a meat processing apparatus according to claim 3, wherein
the position information is information indicating a position and a size of a rectangular area which represents an area where the meat is present, and
the positional deviation detection unit detects the positional deviation when determining that a pair of sides of the rectangular area facing each other in a conveyance direction of the meat in the position information of the meat at the latest time has deviated upstream in the conveyance direction by at least the threshold included in the determination criteria with respect to the position of a pair of sides of the rectangular area facing each other in the conveyance direction of the meat in the position information of the meat at the reference time for the predetermined number of consecutive times or more.

6. The control device for a meat processing apparatus according to claim 3, wherein
the position information is information indicating a position and a size of a rectangular area which represents an area where the meat is present, and
the positional deviation detection unit detects the positional deviation when determining that a pair of sides of the rectangular area facing each other in a conveyance direction of the meat in the position information of the meat at the latest time has deviated downstream in the conveyance direction by at least the threshold included in the determination criteria with respect to the position of a pair of sides of the rectangular area facing each other in the conveyance direction of the meat in the position information of the meat at the reference time for the predetermined number of consecutive times or more.

7. The control device for a meat processing apparatus according to claim 3, wherein
the position information is information indicating a position and a size of a rectangular area which represents an area where the meat is present, and
the positional deviation detection unit detects the positional deviation when determining that a pair of sides of the rectangular area facing each other in a direction orthogonal to a conveyance direction of the meat in the position information of the meat at the latest time has deviated in the same direction by at least the threshold included in the determination criteria with respect to the position of a pair of sides of the rectangular area facing each other in the direction orthogonal to the conveyance direction in the position information of the meat at the reference time for the predetermined number of consecutive times or more.

8. The control device for a meat processing apparatus according to any one of claims 1 to 3, wherein
the position information acquisition unit acquires the position information from a trained model for estimating the position information from the imaging data.

9. The control device for a meat processing apparatus according to any one of claims 1 to 3, wherein
the imaging data is imaging data obtained by imaging the meat during the meat processing from above.

10. A meat processing apparatus, comprising:
the control device according to any one of claims 1 to 3;
a conveyor device for conveying the meat;
an imaging device for acquiring the imaging data; and
the positional deviation correction device.
